# EUROPÄISCHE PATENTSCHRIFT

(11) **EP 4 097 947 B1**
(45) Veröffentlichungstag und Bekanntmachung des Hinweises auf die Patenterteilung: **29.07.2026**
(21) Anmeldenummer: 21711754.8
(22) Anmeldetag: 26.02.2021
(51) Int. Cl.: H04L 9/40, G06F 21/33, G06F 21/44, H04W 12/069, H04L 9/32, H04W 4/42

(54) **VERTEILUNGSVERFAHREN FÜR LIZENZEN AUF ELEKTRONISCHE BAUTEILE**
DISTRIBUTION METHOD FOR LICENSES TO ELECTRONIC PARTS
PROCÉDÉ DE DISTRIBUTION DE LICENCES À DES PIÈCES ÉLECTRONIQUES

(30) Priorität: 26.03.2020 DE 102020203922
(43) Veröffentlichungstag der Anmeldung: 07.12.2022
(73) Patentinhaber: Siemens Mobility GmbH, 80997 München (DE)
(72) Erfinder: LORENZ, Matthias, 38159 Vechelde (DE); JÄHN, Marcel, 38118 Braunschweig (DE); SCHILLING, Benjamin, 38302 Wolfenbüttel (DE)
(74) Vertreter: Siemens Patent Attorneys
(86) Internationale Anmeldenummer: PCT/EP2021/054772
(87) Internationale Veröffentlichungsnummer: WO 2021/190854

(56) Entgegenhaltungen:
- US-A1- 2005 210 254
- US-A1- 2010 037 293
- US-A1- 2017 054 566

## Beschreibung

Es wird ein Verfahren zum Verteilen von Lizenzen auf zumindest ein elektronisches Bauteil angegeben. Darüber hinaus werden ein Computerprogrammprodukt für ein solches Verfahren, ein Bauteil für ein solches Verfahren sowie ein System mit mehreren solcher Bauteile zum Betreiben von Schienenfahrzeugen angegeben.

Die Druckschrift WO 2019/096491 A1 betrifft ein Verfahren und eine Vorrichtung zur Ermöglichung der Authentisierung von Erzeugnissen, insbesondere von industriell gefertigten Geräten.

Die Druckschrift US 2017/0054566 betrifft ein Verfahren und ein System zum Erstellen und zur Gültigkeitsprüfung von Gerätezertifikaten. Dabei werden an einem Produktionsarbeitsplatz Geräte initialisiert, welche jeweils ein Trusted Platform Modul (kurz TPM) enthalten, welches wiederum jeweils einen individuellen Endoresegment Key (kurz EK) enthält. Ein jeweiliger EK besteht dabei aus einem privaten Teil und einem öffentlichen Teil. Der private Teil ist im TPM gespeichert, ohne es je zu verlassen. Beim Initialisieren des mit dem TPM versehenen Gerätes wird am Produktionsarbeitsplatz mit Hilfe einer Software-Anwendung zu dem öffentlichen Teil des EK ein Gerätezertifikat (kurz EK-Zertifikat) erzeugt, indem der öffentliche Teil des EK mit einem privaten Schlüssel des Geräteherstellers signiert wird. Ein zu dem privaten Schlüssel des Geräteherstellers gehörender öffentlicher Schlüssel wird mittels eines Zwischenzertifikats des Geräteherstellers als zum Gerätehersteller gehörend bestätigt. Hierzu wird der öffentliche Schlüssel des Geräteherstellers mit einem privaten Wurzelschlüssel einer Zertifizierungsstelle des Geräteherstellers signiert. Ein zu dem privaten Wurzelschlüssel gehörender öffentlicher Wurzelschlüssel wird ebenfalls mit dem privaten Wurzelschlüssel der Zertifizierungsstelle des Geräteherstellers signiert, so dass ein selbst-signiertes Wurzelzertifikat des Geräteherstellers gebildet ist. Das Gerätezertifikat und das Zwischenzertifikat des Geräteherstellers werden auf dem Gerät gespeichert. Das Wurzelzertifikat der Zertifizierungsstelle des Geräteherstellers wird vom Gerätehersteller veröffentlicht.

Alternativ kann vorgesehen sein, dass nicht der Gerätehersteller, sondern ein Besitzer des Gerätes (im Folgenden als Gerätebesitzer bezeichnet) das Gerätezertifikat erstellt, indem der öffentliche Teil des EK mit einem privaten Schlüssel des Gerätebesitzers signiert wird. Ein zu dem privaten Schlüssel des Gerätebesitzers gehörender öffentlicher Schlüssel wird dann mittels eines Zwischenzertifikats des Gerätebesitzers als zum Gerätebesitzer gehörend bestätigt. Hierzu wird der öffentliche Schlüssel des Gerätebesitzers mit einem privaten Wurzelschlüssel einer Zertifizierungsstelle des Gerätebesitzers signiert. Ein zu dem privaten Wurzelschlüssel gehörender öffentlicher Wurzelschlüssel wird ebenfalls mit dem privaten Wurzelschlüssel der Zertifizierungsstelle des Gerätebesitzers signiert, so dass ein selbst-signiertes Wurzelzertifikat des Gerätebesitzers gebildet ist. Das Gerätezertifikat und das Zwischenzertifikat des Gerätebesitzers werden auf dem Gerät gespeichert. Das Wurzelzertifikat der Zertifizierungsstelle des Gerätebesitzers wird vom Gerätebesitzer durch einen Zertifikatauskunftsdienst bereitgestellt.

Eine zu lösende Aufgabe liegt darin, ein Verfahren anzugeben, mit dem effizient und sicher Lizenzen verbreitet werden können.

Diese Aufgabe wird durch die beigefügten unabhängigen Ansprüche 1 und 12-14, nämlich unter anderem durch ein Verfahren, durch ein Computerprogrammprodukt, durch ein Bauteil sowie durch ein System mit mehreren solcher Bauteile gelöst. Bevorzugte Weiterbildungen sind Gegenstand der übrigen abhängigen Ansprüche.

Das hier beschriebene Verfahren ermöglicht insbesondere die kryptographisch unterstütze Verteilung von Lizenzen an Nutzer durch einen Vertreiber des Bauteils mittels einer kryptographisch signierten Lizenzdatei, auch Cryptographically Signed File genannt.

In mindestens einer Ausführungsform dient das Verfahren zur Verteilung von Lizenzen auf zumindest ein elektronisches Bauteil und umfasst die Schritte:
A) Bereitstellen des zumindest einen Bauteils, wobei das Bauteil eine Kennung und ein Wurzelzertifikat eines Vertreibers des Bauteils umfasst,
B) Erzeugen einer Lizenzdatei, wobei die Lizenzdatei die Kennung und eine oder mehrere Lizenzen des Vertreibers für zumindest einen Nutzer des Bauteils umfasst,
C) Signieren der Lizenzdatei mit einem Zertifikat des Vertreibers, sodass eine signierte Lizenzdatei resultiert, wobei das Zertifikat auf das Wurzelzertifikat zurückgeht,
D) Aufspielen der signierten Lizenzdatei auf das Bauteil, und
E) Inbetriebnehmen des Bauteils durch den zumindest einen Nutzer, wobei die signierte Lizenzdatei durch das Bauteil verifiziert wird, sodass eine Nutzung des Bauteils durch den zumindest einen Nutzer im Umfang der zumindest einen Lizenz freigegeben wird.

Die Lizenzierung von Leistungsmerkmalen und Anwendungen ist ein wichtiges Werkzeug, um eine flexible Preisgestaltung gegenüber Kunden anbieten zu können, insbesondere basierend auf den jeweiligen Anforderungen eines Kunden oder Nutzers, also etwa abhängig davon, welche Leistungsmerkmale oder Anwendungen der betreffende Kunde wünscht. Außerdem lässt sich durch Lizenzen die Preisgestaltung auch auf ein Marktumfeld abstimmen, insbesondere hinsichtlich einer Verfügbarkeit von Leistungsmerkmalen oder Anwendungen von einem Wettbewerber und dessen Preispolitik. Außerdem können mittels Lizenzen ein Entwicklungsaufwand berücksichtigt werden, beispielsweise wie kostenintensiv die Entwicklung des betreffenden Leistungsmerkmals oder der betreffenden Anwendung war.

Die Durchsetzung von Lizenzen dagegen ist oft eine Herausforderung. Verschiedene Kunden haben eine weite Spanne von Motivationen und verschiedene Möglichkeiten, die Durchsetzung von Lizenzen zu umgehen. Verschiedene Arten von Lizenzen erfordern zudem unterschiedliche Akzeptanzniveaus von Kunden.

Mit dem hier beschriebenen Verfahren lassen sich verschiedene Arten von Lizenzen effizient auf elektronische Bauteile verteilen und eine Umgehung von Lizenzen ist erschwert, da die Lizenzen kryptographisch gesichert auf die Bauteile aufgespielt werden.

Bei dem zumindest einen Bauteil für das hier beschriebene Verfahren handelt es sich zum Beispiel um einen Computer, um einen Server, um eine in eine Leiterplatte eingebettete elektronische Komponente, englisch Embedded Component, oder um ein Datenübertragungsmodul. Alternativ kann das Bauteil auch ein Software-Modul sein, sodass das Bauteil nicht notwendigerweise eine strikt abgegrenzte elektronische Untereinheit in einem größeren System, wie einem Computer, zu sein braucht.

Der Vertreiber des Bauteils kann dessen Hersteller sein.

Zu dem hier beschriebenen Verfahren alternative Möglichkeiten, Lizenzen durchzusetzen, liegen etwa darin, vertrauensbasierte Lizenzen zu vergeben. Dabei liegt die Lizenz lediglich auf dem Papier vor und der Lizenzgeber vertraut dem Kunden, also dem Lizenznehmer, gemäß der erteilten Lizenz zu handeln.

Eine weitere alternative Möglichkeit liegt darin, Lizenzen basierend auf Zugangsberechtigungen und/oder basierend auf Lizenzservern zu vergeben. Dies bedeutet, der Anwender loggt sich ein und fragt die lizenzierte Funktionalität ab. Dies erfordert jedoch eine bestehende Internetverbindung.

Weiterhin ist es alternativ möglich, Lizenzen basierend auf einer Hardware-Sicherung zu erteilen. In diesem Fall ist die Lizenz ein Teil eines so genannten Dongles. Die zugehörige Software fragt beim Dongle an, ob die gewollte Funktionalität lizenziert ist.

Weiterhin liegt eine Lizenzierungsmöglichkeit darin, einen Schlüssel zu vergeben, insbesondere einen Software-basierten Schlüssel. Der Schlüssel ist einzugeben, um die betreffende Anwendung und/oder die betreffenden Leistungsmerkmale zu aktivieren. Eine Verifikation erfolgt über einen gespeicherten Schlüssel oder über einen Algorithmus, der einen Schlüssel ableitet.

Zusammengefasst beinhaltet das hier beschriebene Verfahren zum Beispiel die folgenden Schritte, insbesondere in der angegebenen Reihenfolge:
1. Ein Wurzelzertifikat, insbesondere der Trust Anchor, des Vertreibers und/oder des Herstellers des Bauteils ist bevorzugt Teil der ursprünglichen Programmierung des Bauteils, auch als Firmware bezeichnet. Das Wurzelzertifikat ist zum Beispiel ein X.509-Root Certificate.
2. Eine Kennung des Bauteils ist eindeutig und dem Bauteil bekannt. Die Kennung ist zum Beispiel eine Seriennummer oder ein Identifikator, englisch Identifier oder kurz ID, wie eine CPU-ID.
3. Das Bauteil wird vom Vertreiber an den Nutzer übergeben, wobei das Bauteil über bestimmte Anwendungen und/oder Leistungsmerkmale verfügt. Die Abgabe des Bauteils an den Nutzer ist beispielsweise ein Verkauf, eine Vermietung oder ein Leasing.
4. Die Lizenzdatei wird erzeugt, beispielsweise als XML-Datei. Die Lizenzdatei umfasst die Seriennummer der betreffenden Bauteile und Identifikatoren für die vom Nutzer erworbenen Anwendungen und/oder Leistungsmerkmale.

Optional wird in der Lizenzdatei und/oder in den Lizenzen ein Schlüsselparameterspeicherformat verwendet. Mit einem solchen Speicherformat ist es möglich, Identifikatoren für die lizenzierten Anwendungen und/oder Leistungsmerkmale abzuspeichern und somit feingliedrige Lizenzen zu vergeben. Beispielsweise ist ein abgespeicherter Parameter ein maximaler Durchsatz, etwa formuliert als MAX_TROUGHPUT = 50.

Eine weitere Option liegt darin, viele Kennungen oder einen Bereich von Kennungen in der Lizenzdatei abzuspeichern, sodass alle Bauteile, die von den Kennungen erfasst und an den Nutzer übergeben wurden, auf die gleiche Lizenzdatei zurückgreifen können.

Weiterhin ist es optional möglich, eine limitierte Gültigkeitsdauer in der Lizenzdatei und/oder in den Lizenzen zu hinterlegen, so dass die Lizenzen für einen bestimmten zeitlichen Rahmen erworben werden können. Genauso ist es möglich, dass Lizenzen lediglich für eine Testperiode oder zu Testzwecken vergeben werden.

5. Die Lizenzdatei wird dann mit einem Zertifikat des Vertreibers signiert, wobei dieses Zertifikat des Vertreibers auf das im Schritt 1 bereitgestellte Wurzelzertifikat des Vertreibers und/oder des Herstellers zurückführbar ist, zum Beispiel über eine Zertifikatekette, auch als Certificate Chain bezeichnet. Das Signieren erfolgt beispielsweise mittels XML-DSIG.

Optional verfügt das Zertifikat, das für das Signieren der Lizenzdatei verwendet wird, über eine spezielle Schlüsselverwendung, englisch Special Key Usage. Die spezielle Schlüsselverwendung gibt an, dass das betreffende Zertifikat autorisiert ist, die Lizenzdatei und damit die Lizenzen zu signieren.

**6.** Während einer Kommissionierung oder Inbetriebnahme durch den Nutzer oder auch zu einem späteren Zeitpunkt, beispielsweise wenn eine neue Lizenz mit neuen Leistungsmerkmalen erteilt wird, wird die Lizenzdatei auf dem Bauteil installiert. Dies erfolgt beispielsweise mittels HTTP, FDP oder SCP.

Optional liegt eine Basislizenzdatei vorinstalliert auf dem Bauteil vor. Die Basislizenzdatei kann eine Standardlizenz enthalten. Es ist möglich, dass die Basislizenzdatei später durch die oben beschriebene Lizenzdatei ersetzt und/oder ergänzt wird.

7. Das Bauteil verifiziert die Signatur und das Zertifikat der signierten Lizenzdatei, insbesondere ob das Zertifikat des Vertreibers, mit dem die Lizenzdatei signiert ist, auf das Wurzelzertifikat zurückgeht.

Optional verifiziert das Bauteil dabei, ob das Zertifikat, mit dem die Lizenzdatei signiert ist, die spezielle Schlüsselverwendung hat und damit autorisiert ist, die Lizenzdatei zu signieren.

8. Das Bauteil prüft außerdem, ob die Kennung des betreffenden Bauteils in der Liste von Kennungen in der Lizenzdatei vorhanden ist.

9. Wird eine beschränkte Gültigkeitsdauer verwendet, wie im Schritt 4 beschrieben, so wird die Gültigkeitsdauer vom Bauteil überprüft und gegenüber der aktuellen Zeit verifiziert. Dies erfolgt zum Beispiel anhand einer aktuellen Zeit, auf die das Bauteil zugreifen kann, oder auch anhand von Einschaltzyklen, anhand sich periodisch ereignender Ereignisse oder anhand einer Laufzeit des Bauteils.

10. Nach erfolgreicher Verifikation in den Schritten 7 bis 9 wird die betreffende Lizenz und/oder Lizenzinformation aus der Lizenzdatei vom Bauteil genutzt und das Bauteil ermöglicht die Verwendung der lizenzierten Anwendungen und/oder Leistungsmerkmale.

11. Falls nötig, werden die Schritte beginnend mit Schritt 7 wiederholt, beispielsweise wenn eine neue Verbindung hergestellt wird, das Bauteil, das die Lizenzdatei nutzt, neu gestartet wird oder ein Rebooten erfolgt oder auch wenn neue Lizenzen erteilt werden. Es ist möglich, dass im Falle der Erteilung neuer Lizenzen das Durchführen der Schritte 7 bis 10 getriggert wird, beispielsweise durch ein spezielles Signal, das an das Bauteil gesandt wird.

Somit ergibt sich aus dem Bauteil, das ursprünglich die Kennung und das vorinstallierte Wurzelzertifikat des Vertreibers sowie eine Liste von Leistungsmerkmalen aufweist, zusammen mit der basierend auf dem Zertifikat des Vertreibers signierten Lizenzdatei, die die vom Nutzer gewährten Lizenzen sowie die betreffenden Kennungen umfasst, schließlich ein Bauteil umfassend die Kennung, das Wurzelzertifikat des Vertreibers und die vom Vertreiber dem zumindest einen Nutzer erteilten Lizenzen und/oder Nutzungsrechte.

Mit dem hier beschriebenen Verfahren ist es möglich, Lizenzen mit der Unterstützung durch kryptographisch abgesicherte Methoden durchzusetzen. Es ist keine zusätzliche Hardware, wie eine zusätzliche Komponente, ein Modul oder ein Dongle, erforderlich. Es wird keine Cloud-Infrastruktur benötigt. Es können feingliedrige Lizenzen erteilt werden. Eine einzige Lizenzdatei kann für eine Vielzahl von Bauteilen gültig sein, auch bei verschiedenen Nutzern. Dies erlaubt auch die Lizenzierung von Systemmerkmalen. Eine zeitbasierte Lizenzierung ist ermöglicht, beispielsweise für Testversionen oder für jährlich anfallende Lizenzgebühren. Außerdem ist es möglich, neue Lizenzen zu vergeben, beispielsweise durch die Einführung eines Firmware-Updates.

Das hier beschriebene Verfahren beruht damit insbesondere auf der Kombination aus dem Wurzelzertifikat des Vertreibers in dem Bauteil, auf der Kennung, die ebenso in dem Bauteil vorhanden ist, sowie auf der kryptographisch gesicherten Lizenzdatei.

Die verschiedenen Bauteile, auf die die signierte Lizenzdatei optional aufgespielt wird, können baugleich sein. Alternativ ist es möglich, dass die gleiche signierten Lizenzdatei für verschiedene Arten von Bauteilen genutzt wird, beispielsweise für Kommunikationsmodule einerseits und für Server andererseits.

Bei dem Vertreiber des Bauteils handelt es sich insbesondere um einen Hersteller des Bauteils. Jedoch kann der Hersteller auch einen Vertreiber autorisieren, das oben beschriebene Verfahren durchzuführen. Alternativ agiert der Hersteller lediglich im Auftrag des Vertreibers, so dass dann der Hersteller durch den Vertreiber zur Durchführung des oben beschriebenen Verfahrens autorisiert sein kann.

Gemäß zumindest einer Ausführungsform wird das Verfahren bei einer Vielzahl der Bauteile angewandt. Dabei wird bevorzugt im Schritt D) auf alle Bauteile die gleiche signierte Lizenzdatei aufgespielt. Die zugrundeliegende Lizenzdatei umfasst in diesem Fall die Kennungen aller betreffender Bauteile. Somit ist es nicht erforderlich, für jedes Bauteil individuell eine eigene signierte Lizenzdatei zu erzeugen.

Gemäß zumindest einer Ausführungsform ist der Schritt des Signierens der Lizenzdatei ausschließlich vom Vertreiber oder von einer vom Vertreiber und/oder vom Hersteller autorisierten Instanz durchführbar. Damit ist es möglich, dass der Hersteller und/oder der Vertreiber auch volle Kontrolle über Verkauf und Weiterverkauf des Bauteils behält. Insbesondere ist das Bauteil ohne die signierte Lizenzdatei nicht oder nicht voll funktionsfähig. Das heißt, das Vorliegen der signierten Lizenzdatei ist bevorzugt eine notwendige Bedingung für das teilweise oder volle Inbetriebnehmen des Bauteils.

Gemäß zumindest einer Ausführungsform werden zumindest die oben genannten Schritte B), C) und D) vom Vertreiber und/oder vom Hersteller durchgeführt. Damit kann der Vertreiber und/oder der Hersteller die volle Kontrolle über das Signieren und über das Erzeugen der Lizenzdatei ausüben.

Gemäß zumindest einer Ausführungsform wird der Schritt D) vor einem Ausliefern des Bauteils an den Nutzer durchgeführt. Alternativ wird der Schritt D) nach dem Ausliefern durchgeführt.

Gemäß zumindest einer Ausführungsform weisen die Lizenzdatei und/oder die in der Lizenzdatei enthaltenen Lizenzen ein Schlüsselparameterspeicherformat auf. Das Schlüsselparameterspeicherformat listet insbesondere einzelne Parameter und/oder Leistungsmerkmale der betreffenden Lizenzen auf. Mit einem solchen Schlüsselparameterspeicherformat, insbesondere einem einheitlichen Schlüsselparameterspeicherformat, lassen sich feingliedrige Lizenzen erteilen auch für verschiedene Arten von Bauteilen.

Gemäß zumindest einer Ausführungsform enthält die Lizenzdatei eine Gültigkeitsdauer für die zumindest eine Lizenz. Sind mehrere Lizenzen in der Lizenzdatei enthalten, so können jeweils spezifische Gültigkeitsdauern für die einzelnen Lizenzen angegeben werden. Es ist möglich, dass die Gültigkeitsdauern sich auf absolute Zeiträume beziehen oder auf wiederkehrende Ereignisse. Beispielsweise kann in der Lizenzdatei und/oder in den Lizenzen hinterlegt werden, dass Lizenzgebühren nach bestimmten Zeiträumen zu zahlen sind. Dies ist zum Beispiel über entsprechende Softwareaktualisierungen der Bauteile implementierbar.

Gemäß zumindest einer Ausführungsform enthält die Lizenzdatei und/oder enthalten die Lizenzen eine geographische Beschränkung für die zumindest eine Lizenz. Die geographische Beschränkung ist beispielsweise über GPS-Daten oder über eine Ortsangabe in einem Server überprüfbar.

Gemäß zumindest einer Ausführungsform wird im Schritt E) das Verifizieren, ob die signierte Lizenzdatei valide ist, vom Bauteil selbst ohne Zugriff auf externe Ressourcen durchgeführt wird. Das heißt, das Verifizieren kann offline erfolgen.

Gemäß zumindest einer Ausführungsform des Verfahrens, wobei das Verfahren auf eine Vielzahl der Bauteile angewandt wird, werden die betreffenden Bauteile in ein Kommunikationsnetzwerk, insbesondere des Nutzers, integriert. Das heißt, die Bauteile sind dazu eingerichtet, im Netzwerk des Nutzers miteinander zu kommunizieren. Das Kommunikationsnetzwerk kann auch eine Vielzahl verschiedener Nutzer einbeziehen.

Hierbei ist es möglich, dass eine Datenverbindung nur zwischen solchen Bauteilen etabliert werden kann, die die oben genannten Verfahrensschritte A) bis E) erfolgreich durchlaufen haben. Alternativ ist es möglich, dass eine Datenverbindung außerdem zu Bauteilen aufgebaut werden kann, die über eine externe Lizenz des Vertreibers verfügen, wobei diese externe Lizenz bevorzugt die Kennungen der erlaubten Bauteile beinhaltet.

Gemäß zumindest einer Ausführungsform verfügt das Zertifikat des Vertreibers, mit dem die Lizenzdatei signiert wird, über eine spezielle Schlüsselverwendung, englisch Special Key Usage, die anzeigt, dass dieses Zertifikat zum Signieren von Lizenzdateien und/oder von Lizenzen autorisiert ist. Demgemäß prüft das Bauteil im Schritt D) und/oder im Schritt E) bevorzugt, ob das Zertifikat des Vertreibers über die spezielle Schlüsselverwendung verfügt.

Darüber hinaus wird ein Computerprogrammprodukt angegeben, umfassend Befehle, die bei der Ausführung des Programms durch einen Computer oder durch ein Computersystem diesen veranlassen oder dieses veranlasst, insbesondere die Schritte B), C) und D) oder alle Schritte eines Verfahrens nach einer oder mehreren der oben genannten Ausführungsformen auszuführen. Merkmale des Computerprogrammprodukts sind daher auch für das Verfahren offenbart und umgekehrt. Insbesondere wird das betreffende Programm teilweise oder vollständig auf dem Bauteil ausgeführt.

Darüber hinaus wird ein Bauteil angegeben, umfassend einen Speicher, einen Prozessor und eine Kommunikationsschnittstelle. Das Bauteil ist für ein Verfahren eingerichtet, wie in Verbindung mit einer oder mehrerer der oben genannten Ausführungsformen beschrieben, insbesondere für die Verfahrensschritte A) und E). Merkmale des Bauteils sind daher auch für das Verfahren offenbart und umgekehrt.

Schließlich wird ein System zum Betreiben von Schienenfahrzeugen angegeben, wobei das System bevorzugt mehrere der vorgenannten Bauteile umfasst. Dabei befinden sich die bevorzugt mehreren Bauteile insbesondere in zumindest einem der Schienenfahrzeuge, in zumindest einer Streckenzentrale und/oder in zumindest einem Stellwerk des Systems.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei die
- Figuren 1 und 2: schematische Darstellungen von Ausführungsbeispielen von hier beschriebenen Verfahren zur Verteilung von Lizenzen auf hier beschriebene Bauteile zeigen,
- Figur 3: eine schematische Darstellung eines Kommunikationsnetzwerks mit hier beschriebenen Bauteilen zeigt,
- Figur 4: eine schematische Darstellung eines Systems mit hier beschriebenen Bauteilen zum Betreiben von Schienenfahrzeugen zeigt, und
- Figur 5: eine schematische Darstellung eines Ausführungsbeispiels einer hier beschriebenen Lizenz und/oder einer hier beschriebenen Lizenzdatei mit einem Schlüsselparameterspeicherformat zeigt.

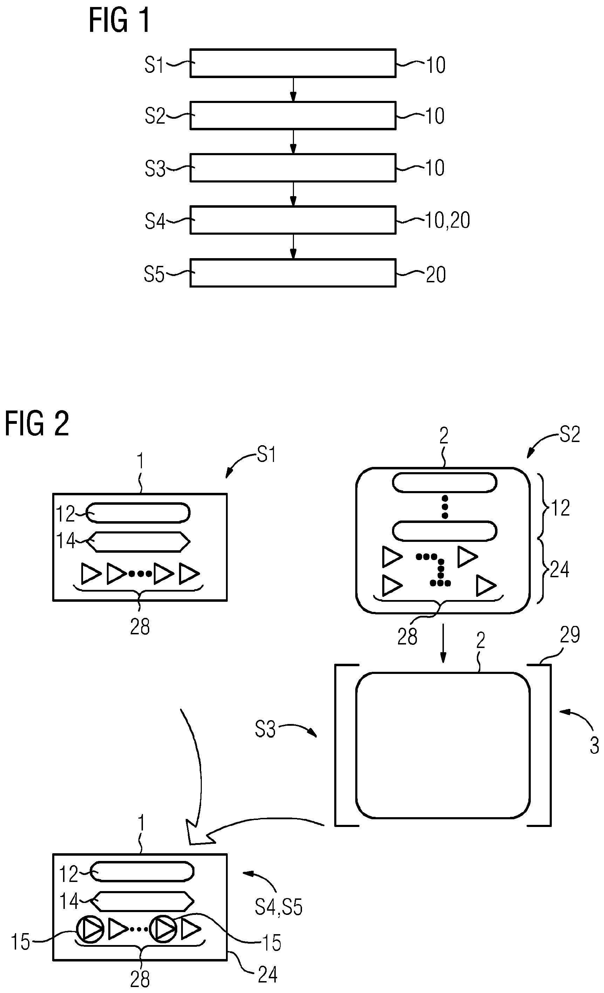

In den Figuren 1 und 2 ist schematisch ein Ausführungsbeispiel eines hier beschriebenen Verfahrens zur Verteilung von Lizenzen 24 eines Vertreibers 10 auf elektronische Bauteile 1 beschrieben. Die Verfahrensschritte, wie in Figur 1 als Ablaufdiagramm illustriert, sind anhand von Figur 2 näher erläutert.

In einem ersten Schritt S1 wird von einem Vertreiber 10 ein elektronisches Bauteil 1 bereitgestellt. Bei dem Bauteil 1 handelt es sich beispielsweise um einen Server, jedoch kann das Bauteil 1 auch ein Software-Modul sein. Der Vertreiber 10 kann ein Hersteller des Bauteils 1 sein. Das Bauteil 1 umfasst eine eindeutige Kennung 12, zum Beispiel eine Seriennummer oder eine ID. Außerdem umfasst das Bauteil 1 ein Wurzelzertifikat 14 des Vertreibers 10. Das vorinstallierte Wurzelzertifikat 14 kann auch als Manufacturer Trust Anchor oder Vendor Trust Anchor bezeichnet werden.

Das Bauteil 1 verfügt über mehrere Leistungsmerkmale 28. Die Leistungsmerkmale 28 entsprechen Fähigkeiten oder Anwendungen, die das Bauteil 1 ausüben kann. Die Leistungsmerkmale 28 sind bevorzug aufeinander aufbauend oder unabhängig voneinander freischaltbar und/oder ausführbar.

Im Schritt S2 wird bevorzugt vom Vertreiber 10 eine Lizenzdatei 2 erzeugt. Die Lizenzdatei 2 umfasst mehrere Kennungen 12, die jeweils ein bestimmtes Bauteil 1 eindeutig identifizieren. Außerdem umfasst die Lizenzdatei 2 eine oder mehrere Lizenzen 24. Die zumindest eine Lizenz 24 enthält zumindest ein Leistungsmerkmal 28, insbesondere mehrere der Leistungsmerkmale 28. Aus der zumindest einen Lizenz ergibt sich, welches zumindest eine Leistungsmerkmal 28 für welche Kennungen 12 und damit Bauteile lizensiert ist.

Im Schritt S3 erfolgt durch den Vertreiber 10 ein Signieren der Lizenzdatei 2 mit einem Zertifikat 29 des Vertreibers 10. Hieraus resultiert eine signierte Lizenzdatei 3. Das Zertifikat 29 kann optional über eine spezielle Schlüsselverwendung, englisch Special Key Usage, verfügen.

Im weiteren Schritt S4 wird die signierte Lizenzdatei 3 auf das Bauteil 1 aufgespielt, zum Beispiel durch den Vertreiber 10 oder auch durch den Nutzer 20, und es wird vom Bauteil 1 geprüft, ob das Zertifikat 29 ordnungsgemäß ist, ob sich das Zertifikat 29 des Vertreibers 10 also auf das Wurzelzertifikat 14 zurückführen lässt.

Mit anderen Worten erfolgt im Schritt S4 und/oder im Schritt S5 bevorzugt eine Verifikation der signierten Lizenzdatei 3 durch das Bauteil 1, insbesondere im Rahmen der Inbetriebnahme des Bauteils 1 im Schritt S5 und bevorzugt durch den Nutzer 20, alternativ auch durch den Vertreiber 10. Dies schließt eine Prüfung mit ein, ob die Kennung 12 des konkreten Bauteils 1 in der Liste von Kennungen 12 der Lizenzdatei 2 enthalten ist, ob also die Lizenzdatei 2 eine zulässige Kennung 12 für das konkrete Bauteil 1 beinhaltet.

Nach erfolgreicher Verifikation beinhaltet das Bauteil 1 somit die überprüfte Kennung 12, das Wurzelzertifikat 14 des Vertreibers 10 sowie zumindest die das Bauteil 1 betreffende Lizenz 24 des Nutzers 20. In der Lizenz 24 sind freigeschaltete Leistungsmerkmale 15 enthalten, die das Bauteil 1 aufgrund der Lizenz 24 schließlich durchführen darf. Dabei können weitere Aspekte, wie eine zeitliche Befristung der freigeschalteten Leistungsmerkmale 15, berücksichtigt werden.

Es ist möglich, dass die Verifikation in regelmäßigen Zeitabständen und/oder bei jedem Einschalten oder Neustarten des Bauteils 1 durchgeführt wird. Dies gilt speziell dann, wenn zeitlich befristete Lizenzen 24 vorliegen können.

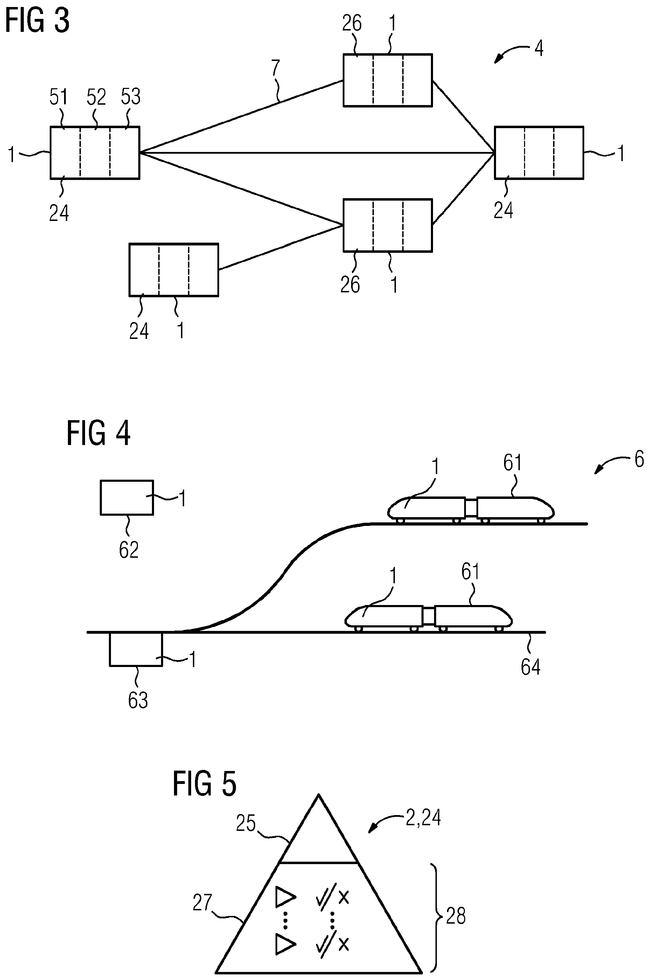

In Figur 3 ist ein Kommunikationsnetzwerk 4 illustriert. Das Kommunikationsnetzwerk 4 umfasst mehrere der Bauteile 1. Bevorzugt umfassen die Bauteile 1 dabei jeweils einen Speicher 51, einen Prozessor 52 sowie eine Kommunikationsschnittstelle 53. Die Kommunikationsschnittstelle 53 kann für eine drahtgebundene oder auch für eine kabellose Kommunikation eingerichtet sein, zum Beispiel für einen Zugfunk gemäß dem Standard GSM-R. Insbesondere die Lizenzdatei 2 mit den verschiedenen Zertifikaten 24 ist je in den Speichern 51 der Bauteile 1 hinterlegt.

Dabei können alle Bauteile 1 über die gleiche Lizenzdatei 2 oder über unterschiedliche Lizenzdateien 2 verfügen. Im Falle einer gemeinsamen Lizenzdatei 2 umfasst diese bevorzugt mehrere der Lizenzen 24, die spezifisch für bestimmte Bauteile 1 sein können. Damit ist erreichbar, dass in den Bauteilen 1 unterschiedliche Leistungsmerkmale freigeschalten werden, obwohl die gleiche Lizenzdatei 2 vorliegt.

Zum Beispiel können in dem Kommunikationsnetzwerk 4 nur solche Bauteile 1 untereinander eine Kommunikationsverbindung aufbauen oder auf eine bestimmte Art von Daten zugreifen und/oder austauschen, die entweder das Verfahren der Figuren 1 und 2 durchlaufen haben und/oder die anderweitig über eine externe Lizenz 26 des Vertreibers 10 verfügen, die in den betreffenden Bauteilen 1 hinterlegt ist.

In Figur 4 ist ein System 6 zum Betreiben von Schienenfahrzeugen 61 schematisch illustriert. Das System 6 umfasst ein Schienennetz 64, auf dem bevorzugt mehrere der Schienenfahrzeuge 61 verkehren. Weiterhin umfasst das System 6 bevorzugt zumindest ein Stellwerk 63 sowie zumindest eine Streckenzentrale 62. Die Streckenzentrale 62 ist insbesondere eine ETCS-Streckenzentrale, auch als Radio Block Centre oder kurz RBC bezeichnet.

Bevorzugt umfassen sowohl die Schienenfahrzeuge 61 als auch die Streckenzentrale 62 sowie das Stellwerk 63 je zumindest eines der Bauteile 1 mit den Lizenzen 24.

In Figur 5 ist schematisch ein Aufbau einer Lizenzdatei 2 oder einer Lizenz 24 illustriert. Die Lizenzdatei 2 und/oder die Lizenz 24 umfasst ein Kopfteil 26, auch als Header bezeichnet. Außerdem verfügt die Lizenzdatei 2 und/oder die Lizenz 24 über ein Schlüsselparameterspeicherformat 27, in dem die Leistungsmerkmale 28 aufgelistet sind. Insbesondere ist dem Schlüsselparameterspeicherformat 27 zu entnehmen, welche Leistungsmerkmale 28 freizuschalten sind, symbolisiert durch ein Häkchen, und welche Leistungsmerkmale 28 nicht lizensiert sind, symbolisiert durch ein Kreuz. Mit einem solchen Schlüsselparameterspeicherformat 27 sind feinteilige Lizenzen 24 weitgehend standardisiert auf eine Vielzahl von Bauteilen 1 aufspielbar.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: elektronisches Bauteil
- 10: Vertreiber
- 12: Kennung des Bauteils
- 14: Wurzelzertifikat des Vertreibers
- 15: freigeschaltetes Leistungsmerkmal
- 2: Lizenzdatei mit den Lizenzen
- 20: Nutzer des Bauteils
- 24: Lizenz des Vertreibers für den Nutzer in der Lizenzdatei
- 25: Kopfteil
- 26: externe Lizenz des Vertreibers für den Nutzer
- 27: Schlüsselparameterspeicherformat
- 28: Leistungsmerkmal
- 29: Zertifikat des Vertreibers
- 3: signierte Lizenzdatei
- 4: Kommunikationsnetzwerk
- 51: Speicher
- 52: Prozessor
- 53: Kommunikationsschnittstelle
- 6: System zum Betreiben von Schienenfahrzeugen
- 61: Schienenfahrzeug
- 62: Streckenzentrale
- 63: Stellwerk
- 64: Schienennetz
- 7: Datenverbindung
- S1-S5: Verfahrensschritt

## Patentansprüche

1. Verfahren zum Verteilen von Lizenzen (24) auf mindestens ein elektronisches Bauteil (1) mit den Schritten:
A) Bereitstellen des Bauteils (1), wobei das Bauteil (1) eine Kennung (12) und ein Wurzelzertifikat (14) eines Vertreibers (10) des Bauteils (1) umfasst,
B) Erzeugen einer Lizenzdatei (2), wobei die Lizenzdatei (2) die Kennung (12) und zumindest eine Lizenz (24) des Vertreibers (10) für zumindest einen Nutzer (20) des Bauteils (1) umfasst,
C) Signieren der Lizenzdatei (2) mit einem Zertifikat (29) des Vertreibers (10), sodass eine signierte Lizenzdatei (3) resultiert, wobei das Zertifikat (29) auf das Wurzelzertifikat (14) zurückgeht,
D) Aufspielen der signierten Lizenzdatei (3) auf das Bauteil (1), und
E) Inbetriebnehmen des Bauteils (1) durch den zumindest einen Nutzer (20), wobei die signierte Lizenzdatei (3) durch das Bauteil (1) verifiziert wird, sodass eine Nutzung des Bauteils (1) durch den zumindest einen Nutzer (20) im Umfang der zumindest einen Lizenz (24) freigegeben wird.

2. Verfahren nach Anspruch 1,
wobei die Lizenzdatei (2) eine Vielzahl von Kennungen (12) umfasst und die gleiche signierte Lizenzdatei (3) auf eine Vielzahl der Bauteile (1) aufgespielt wird.

3. Verfahren nach einem der Ansprüche 1 oder 2,
wobei die Lizenzdatei (2) und/oder die in der Lizenzdatei (2) enthaltenen Lizenzen (24) ein Schlüsselparameterspeicherformat (27) für einzelne Leistungsmerkmale (28) der betreffenden zumindest einen Lizenz (24) aufweisen oder aufweist.

4. Verfahren nach einem der Ansprüche 1 bis 3,
wobei die Lizenzdatei (2) eine Gültigkeitsdauer für die zumindest eine Lizenz (24) enthält.

5. Verfahren nach einem der Ansprüche 1 bis 4,
wobei die Lizenzdatei (2) eine geographische Beschränkung für die zumindest eine Lizenz (24) enthält.

6. Verfahren nach einem der Ansprüche 1 bis 5,
wobei im Schritt E) das Verifizieren, ob die signierte Lizenzdatei (3) valide ist, vom Bauteil (1) selbst ohne Zugriff auf externe Ressourcen durchgeführt wird.

7. Verfahren nach einem der Ansprüche 1 bis 6,
wobei der Schritt C) ausschließlich vom Vertreiber (10) oder von einer vom Vertreiber (10) autorisierten Instanz durchführbar ist und das Bauteil (1) ohne die signierte Lizenzdatei (3) funktionsunfähig ist.

8. Verfahren nach einem der Ansprüche 1 bis 7,
wobei zumindest die Schritte B), C) und D) vom Vertreiber (10) durchgeführt werden.

9. Verfahren nach einem der Ansprüche 1 bis 8,
das auf viele der Bauteile (1) angewandt wird,
wobei diese Bauteile (1) in ein Kommunikationsnetzwerk (4) des zumindest einen Nutzers (20) integriert werden,
wobei eine Datenverbindung (7) und/oder ein Zugriff auf bestimmte Daten nur zwischen solchen Bauteilen (1) etabliert werden kann, die über eine gültige, in der Lizenzdatei (2) enthaltene Lizenz (24) oder über eine gültige, vom Vertreiber (10) erteilte externe Lizenz (26) des Vertreibers (10) verfügen.

10. Verfahren nach einem der Ansprüche 1 bis 9,
wobei das Zertifikat (29) des Vertreibers (10) über eine spezielle Schlüsselverwendung verfügt, die anzeigt, dass dieses Zertifikat (29) zum Signieren von Lizenzen (24) autorisiert ist, und
wobei das Bauteil (1) im Schritt D) und/oder im Schritt E) prüft, ob das Zertifikat (29) des Vertreibers (10) über die spezielle Schlüsselverwendung verfügt.

11. Verfahren nach einem der Ansprüche 1 bis 10,
wobei das Bauteil (1) ein Rechner, ein Server, eine in eine Leiterplatte eingebettete elektronische Komponente oder ein Datenübertragungsmodul ist.

12. Computerprogrammprodukt, umfassend Befehle, die bei der Ausführung des Programms durch einen Computer diesen veranlassen, alle die Schritte des Verfahrens nach einem der Ansprüche 1 bis 11 auszuführen.

13. Bauteil (1),
umfassend einen Speicher (51), einen Prozessor (52) und eine Kommunikationsschnittstelle (53),
wobei das Bauteil (1) für ein Verfahren nach einem der Ansprüche 1 bis 11 eingerichtet ist.

14. System (6) zum Betreiben von Schienenfahrzeugen (61), das mehrere Bauteile (1) nach Anspruch 13 umfasst,
wobei sich die Bauteile (1) in zumindest einem der Schienenfahrzeuge (61), in zumindest einer Streckenzentrale (62) und/oder in zumindest einem Stellwerk (63) des Systems (6) befinden.

## Claims

1. Method for distributing licenses (24) to at least one electronic component (1) having the steps:
A) providing the component (1), wherein the component (1) comprises an identifier (12) and a root certificate (14) of a distributor (10) of the component (1),
B) generating a license file (2), wherein the license file (2) comprises the identifier (12) and at least one license (24) of the distributor (10) for at least one user (20) of the component (1),
C) signing the license file (2) with a certificate (29) of the distributor (10) so that a signed license file (3) results, wherein the certificate (29) reverts back to the root certificate (14),
D) uploading the signed license file (3) onto the component (1), and
E) commissioning the component (1) by means of the at least one user (20), wherein the signed license file (3) is verified by the component (1), so that use of the component (1) is enabled by the at least one user (20) within the scope of the at least one license (24).

2. Method according to claim 1,
wherein the license file (2) comprises a plurality of identifiers (12) and the same signed license file (3) is uploaded onto a plurality of components (1).

3. Method according to one of claims 1 or 2,
wherein the license file (2) and/or the licenses (24) contained in the license file (2) have or has a key parameter storage format (27) for individual performance features (28) of the relevant at least one license (24).

4. Method according to one of claims 1 to 3,
wherein the license file (2) contains a validity duration for the at least one license (24).

5. Method according to one of claims 1 to 4,
wherein the license file (2) contains a geographic restriction for the at least one license (24).

6. Method according to one of claims 1 to 5,
wherein in step E), the verification as to whether the signed license file (3) is valid is carried out by the component (1) itself without accessing external resources.

7. Method according to one of claims 1 to 6,
wherein step C) can be carried out exclusively by the distributor (10) or by an entity authorized by the distributor (10) and the component (1) is inoperable without the signed license file (3).

8. Method according to one of claims 1 to 7,
wherein at least the steps B), C) and D) are carried out by the distributor (10).

9. Method according to one of claims 1 to 8,
which is applied to many of the components (1),
wherein these components (1) are integrated into a communication network (4) of the at least one user (20),
wherein a data link (7) and/or an access to specific data can only be established between such components (1) which have a valid license (24) contained in the license file (2) or a valid external license (26) of the distributor (10) issued by the distributor (10).

10. Method according to one of claims 1 to 9,
wherein the certificate (29) of the distributor (10) has a special key usage, which indicates that this certificate (29) is authorized to sign licenses (24), and
wherein in step D) and/or in step E), the component (1) checks whether the certificate (29) of the distributor (10) has the special key usage.

11. Method according to one of claims 1 to 10, wherein the component (1) is a computer, a server, an electronic component embedded in a printed circuit board or a data transfer module.

12. Computer program product, comprising commands, which, upon execution of the program, cause the computer to execute all the steps of the method according to one of claims 1 to 11.

13. Component (1), comprising a memory (51), a processor (52) and a communication interface (53), wherein the component (1) is configured for a method according to one of claims 1 to 11.

14. System (6) for operating rail vehicles (61), which comprises several components (1) according to claim 13, wherein the components (1) are located in at least one of the rail vehicles (61), in at least one route control centre and/or in at least one signal box (63) of the system (6).

## Revendications

1. Procédé de distribution de licences (24) à au moins une pièce (1) électronique, comprenant les stades :
A) se procurer la pièce (1), dans lequel la pièce (1) comprend une identification (12) et un certificat (14) racine d'un fournisseur (10) de la pièce (1),
B) production d'un fichier (2) de licence, dans lequel le fichier (2) de licence comprend l'identification (12) et au moins une licence (24) du fournisseur (10) pour au moins un utilisateur (20) de la pièce (1),
C) signer le fichier (2) de licence par un certificat (29) du fournisseur (10), de manière à obtenir un fichier (3) de licence signé, dans lequel le certificat (29) se reporte au certificat (14) racine,
D) charger le fichier (3) de licence signé sur la pièce (1), et
E) mettre en fonctionnement la pièce (1) par le au moins un utilisateur (20), dans lequel le fichier (3) de licence signé est vérifié par la pièce (1), de manière à valider une utilisation de la pièce (1) par le au moins un utilisateur (20) dans l'étendue de la au moins une licence (24).

2. Procédé suivant la revendication 1,
dans lequel le fichier (2) de licence comprend une pluralité d'identifications (12) et on charge le même fichier (3) de licence signé sur une pluralité des pièces (1).

3. Procédé suivant l'une des revendications 1 ou 2,
dans lequel le fichier (2) de licence et/ou les licences (24) contenues dans le fichier (2) de licence a ou ont un format (27) de mémoire de paramètres de clé pour diverses caractéristiques (28) de puissance de la au moins une licence (24) concernée.

4. Procédé suivant l'une des revendications 1 à 3,
dans lequel le fichier (2) de licence contient une durée de validité de la au moins une licence (24).

5. Procédé suivant l'une des revendications 1 à 4,
dans lequel le fichier (2) de licence contient une limitation géographique de la au moins une licence (24).

6. Procédé suivant l'une des revendications 1 à 5,
dans lequel dans le stade E) on effectue, par la pièce (1) soi-même sans accès à des ressources extérieures, la vérification du point de savoir, si le fichier (3) de licence signé est valable.

7. Procédé suivant l'une des revendications 1 à 6,
dans lequel le stade C) peut être exécuté exclusivement par le fournisseur (10) ou par une instance autorisée par le fournisseur (10) et la pièce (1) n'est pas apte à fonctionner sans le fichier (3) de licence signé.

8. Procédé suivant l'une des revendications 1 à 7,
dans lequel au moins les stades B), C) et D) sont effectués par le fournisseur (10).

9. Procédé suivant l'une des revendications 1 à 8,
que l'on applique à de nombreuses pièces (1),
dans lequel on intègre ces pièces (1) dans un réseau (4) de communication du au moins un utilisateur (20), dans lequel on peut établir une communication (7) de données et/ou un accès à des données déterminées seulement entre les pièces (1), qui disposent d'une licence (24) valable contenue dans le fichier (2) de licence ou d'une licence (26) extérieure du fournisseur (10) donnée par le fournisseur (10).

10. Procédé suivant l'une des revendications 1 à 9,
dans lequel le certificat (29) du fournisseur (10) dispose d'une application à clé spéciale, qui indique que ce certificat (29) est autorisé à signer des licences (24), et
dans lequel la pièce (1) contrôle dans le stade D) et/ou dans le stade E), si le certificat (29) du fournisseur (10) dispose de l'application à clé spéciale.

11. Procédé suivant l'une des revendications 1 à 10,
dans lequel la pièce (1) est un ordinateur, un serveur, un composant électronique intégré dans une plaquette à circuit imprimé ou à module de transmission de données.

12. Produit de programme d'ordinateur, comprenant des instructions, qui, lors de l'exécution du programme par ordinateur, font que celui-ci exécute tous les stades du procédé suivant l'une des revendications 1 à 11.

13. Pièce (1),
comprenant une mémoire (51), un processeur (52) et une interface (53) de communication,
dans laquelle la pièce (1) est agencée pour un procédé suivant l'une des revendications 1 à 11.

14. Système (6) pour faire fonctionner des véhicules (61) ferroviaires, qui comprend plusieurs pièces (1) suivant la revendication 13,
dans lequel les pièces (1) se trouvent dans au moins l'un des véhicules (61) ferroviaires, dans au moins un poste (62) centralisé de voie et/ou dans au moins un poste (63) de commande du système (6).
